(19) Europäisches Patentamt
European Patent Office
Office européen des brevets

(11) **EP 4 670 869 A1**

(12) **EUROPEAN PATENT APPLICATION**
published in accordance with Art. 153(4) EPC

(43) Date of publication:
**31.12.2025 Bulletin 2026/01**

(21) Application number: **24760419.2**

(22) Date of filing: **21.02.2024**

(51) International Patent Classification (IPC):
*B22F 1/00* (2022.01)    *B22F 1/05* (2022.01)
*B22F 1/07* (2022.01)    *B22F 1/14* (2022.01)
*B22F 9/20* (2006.01)    *B82Y 30/00* (2011.01)
*C22C 5/00* (2006.01)    *C22C 30/00* (2006.01)

(52) Cooperative Patent Classification (CPC):
**B22F 1/00; B22F 1/05; B22F 1/07; B22F 1/14;
B22F 9/20; B82Y 30/00; C22C 5/00; C22C 30/00**

(86) International application number:
**PCT/JP2024/006396**

(87) International publication number:
**WO 2024/177121 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.02.2023 JP 2023026471
28.06.2023 JP 2023106367
28.06.2023 JP 2023106375**

(71) Applicant: **TANAKA PRECIOUS METAL
TECHNOLOGIES CO., LTD.
Tokyo 103-0025 (JP)**

(72) Inventors:
• **KONDO, Yoshie**
  **Hiratsuka-shi, Kanagawa 254-0021 (JP)**
• **HORIKAWA, Tomu**
  **Hiratsuka-shi, Kanagawa 254-0021 (JP)**
• **YAMADA, Takashi**
  **Hiratsuka-shi, Kanagawa 254-0021 (JP)**
• **MIYAMOTO, Hiroshi**
  **Hiratsuka-shi, Kanagawa 254-0021 (JP)**
• **TAKEHARA, Masahiko**
  **Hiratsuka-shi, Kanagawa 254-0021 (JP)**
• **HOSOI,Takuya**
  **Hiratsuka-shi, Kanagawa 254-0021 (JP)**

(74) Representative: **Scott, Stephen John
YUJA IP LAW
East Coast House
25 Skeldergate
York YO1 6DH (GB)**

(54) **NOBLE METAL ALLOY POWDER, NOBLE METAL ALLOY PASTE, NOBLE METAL ALLOY FILM, AND PRODUCTION METHODS OF THOSE**

(57) Provided is a noble metal alloy powder having both high crystallinity and compositional uniformity. The noble metal alloy powder is formed of an alloy of 5 or more noble metal elements, has an average particle diameter of 10 μm or less, has a crystallite size of 80 nm to 140 nm, and exhibits an X-ray diffraction spectrum in which a number of peaks observed in a diffraction angle 2θ range of 38° to 44° is 1.

*FIG. 1*

```
Raw material
preparation step
      ↓
Slurry production step
      ↓
Mixing step
      ↓
First firing step
      ↓
First acetic acid
treatment step
      ↓
First washing step
```

EP 4 670 869 A1

## Description

TECHNICAL FIELD

The present disclosure relates to a noble metal alloy powder, a noble metal alloy paste, a noble metal alloy film, and methods of producing the same.

BACKGROUND

Noble metal powders are used in a variety of applications due to being chemically stable and also displaying catalytic activity in various chemical reactions. In the production of electronic components, for example, electrodes and wiring are formed through printing and firing of pastes that contain noble metal powders. Moreover, noble metal powders are also widely used as various catalysts such as electrode catalysts of fuel cells.

Examples of noble metal elements include gold (Au), silver (Ag), platinum (Pt), palladium (Pd), rhodium (Rh), iridium (Ir), ruthenium (Ru), and osmium (Os). Although these elements belong to a single group referred to as the noble metal elements, these elements differ from one another in terms of actual physical and chemical characteristics. Moreover, noble metal alloys formed of these noble metal elements are known to have significantly different properties depending on the composition thereof. For this reason, there is demand for powders formed of noble metal alloys of various compositions in order to enhance the functionality and characteristics of noble metal powders.

Furthermore, in recent years, there has been ongoing research related to high-entropy alloys formed of noble metals. Although the meaning of high-entropy alloy varies depending on the definition that is adopted, the term "high-entropy alloy" according to a narrow definition refers to an alloy that contains roughly equiatomic quantities of 5 or more elements and in which a single phase solid solution is formed. High-entropy alloys are attracting attention due to having significantly different properties to typical alloys. High-entropy alloys in which base metal elements such as Cr, Mn, Fe, Co, and Ni are used are more common, but there are also instances in which high-entropy alloys are synthesized from only noble metal elements.

For example, in Non-Patent Literature (NPL) 1, a powder of a high-entropy alloy that is formed of 8 noble metal elements is produced by a wet reduction method (also referred to as a liquid-phase reduction method or a chemical reduction method). Moreover, it is clear from NPL 1 that this powder displays exceptional hydrogen evolution reaction catalytic activity.

As set forth above, multicomponent noble metal alloy powders that are formed of multiple noble metal elements are attracting interest.

CITATION LIST

Patent Literature

PTL 1: JP H10-102107 A
PTL 2: JP 2011-162868 A
PTL 3: JP 2022-150862 A
PTL 4: JP 2022-139228 A

Non-Patent Literature

NPL 1: Journal of the American Chemical Society, February 2022, Vol. 144, No. 8, p.3365-3369

SUMMARY

(Technical Problem)

Physical properties of noble metal powders are known to be largely dependent on crystallinity in addition to composition. Therefore, there is demand for controlling crystallinity in noble metal alloy powders such as described above. In particular, high crystallinity is desirable from viewpoints such as ease of sintering and high activity in the various applications that are envisaged for noble metal alloy powders.

However, studies conducted by the inventors have revealed that a noble metal alloy powder obtained by a wet reduction method such as adopted in NPL 1 has comparatively low crystallinity.

On the other hand, known methods of producing noble metal powders include not only wet methods, but also a method that involves firing a powder of noble metals or noble metal compounds (hereinafter, referred to as a firing method).

For example, Patent Literature (PTL) 1 proposes a method of producing a Pt-Rh alloy powder by mixing Pt powder and Rh powder and firing these powders in the presence of calcium carbonate. PTL 1 discloses that this method enables control of particle diameter and crystallite size of the obtained powder.

Moreover, PTL 2 proposes a method of producing a noble metal powder by disintegrating an aggregated material obtained through reductive heat treatment of a noble metal chloride and subsequently performing firing in the presence of calcium carbonate. PTL 2 discloses that a noble metal powder having high crystallinity and purity is obtained by this method.

As set forth above, the firing method enables production of a noble metal powder having excellent crystallinity.

However, as a result of further studies, the inventors found that when a noble metal alloy powder is produced by a conventional firing method such as proposed in PTL 1 or 2, non-uniformity arises in the distribution of constituent elements (i.e., variation of alloy composition arises). Since variation of alloy composition means that there is also variation of characteristics of the powder, there is demand for a noble metal alloy powder having excellent compositional uniformity in order that the original characteristics of the noble metal alloy are displayed.

In particular, it is considered to be desirable to reduce compositional non-uniformity to as great an extent as possible when producing a high-entropy alloy such as previously described. In other words, the presence of compositional non-uniformity means that the condition of inclusion of an equiatomic quantity of each element is not satisfied in the portion where there is non-uniformity, and thus it may not be possible to obtain the original characteristics of the high-entropy alloy. Moreover, there are instances in which a single phase solid solution cannot be formed when there is high compositional non-uniformity.

Thus, there is a problem in the conventional techniques in terms that it is difficult to obtain a noble metal alloy powder having both high crystallinity and excellent compositional uniformity.

Moreover, if a noble metal alloy powder having excellent compositional uniformity could be obtained, this would also be advantageous in formation of a noble metal alloy film. The following explains this point.

Although there are various methods by which a metal film can be formed such as electroplating, electroless plating, and physical vapor deposition (PVD), a method of using a metal paste has been widely adopted in recent years, centered particularly on the field of electronics.

A metal paste is obtained by dispersing a metal powder in a solvent to obtain a paste-like form. Since metal pastes can easily be used for forming patterns by techniques such as screen printing, metal pastes can suitably be used in the formation of wiring, electrodes, and resistors of small electronic components. In addition, metal pastes can also be used as conductive bonding materials for bonding various types of semiconductor elements to substrates.

Although various metals can be used as metal powders that are contained in such metal pastes, noble metals, in particular, are often used. This is because in addition to being chemically stable, noble metal elements have various excellent characteristics such as low electrical resistance, high thermal conductivity, and catalytic activity in various chemical reactions.

Although Au, Ag, Pt, Pd, Rh, Ir, Ru, and Os belong to a single group referred to as the noble metal elements, these elements differ from one another in terms of actual physical and chemical characteristics as previously described. Moreover, noble metal alloys formed of these noble metal elements are known to have significantly different properties depending on the composition thereof. Therefore, the formation of a film formed of a plurality of noble metal elements has also been proposed in the field of metal pastes.

For example, PTL 3 proposes forming a thick-film resistor using a paste that contains Ag powder and Pd powder. By adjusting the mixing ratio of the Ag powder and the Pd powder contained in the paste, it is possible to control the temperature coefficient of resistance of the thick-film resistor.

Moreover, PTL 4 proposes forming a sensing electrode of an ammonia sensor using a paste that contains a noble metal alloy powder of a Pt-Au alloy or the like.

Conventional pastes such as those given as examples in PTL 3 and 4 enable the formation of a film containing two noble metal elements. However, it is expected that an even wider variety of characteristics could be obtained were it possible to form a multicomponent noble metal alloy film formed of a larger number of noble metals.

Unfortunately, studies conducted by the inventors revealed that non-uniformity arises in the distribution of constituent elements (i.e., variation of alloy composition arises) in an inner part of an obtained noble metal alloy film when using a paste that is obtained simply by mixing a plurality of noble metal powders. Although the reason for this is not completely clear, the large difference in characteristics such as melting point and specific gravity between the noble metal elements is thought to be a factor.

When there is variation of alloy composition in this manner, this means that characteristics of a film will also vary. Therefore, there is demand for a paste that is capable of forming a noble metal alloy film having excellent compositional uniformity in order that the original characteristics of the noble metal alloy are displayed.

In particular, in order to produce a film formed of a high-entropy alloy such as previously described, it is desirable to reduce compositional non-uniformity as much as possible. This is because the presence of compositional non-uniformity means that the condition of inclusion of an equiatomic quantity of each element is not satisfied in the portion where there is non-uniformity, and thus the original characteristics of the high-entropy alloy cannot be obtained. Moreover, there are instances in which a single phase solid solution cannot be formed when there is high compositional non-uniformity.

Thus, there is a problem in the conventional techniques in terms that it is difficult to obtain a multicomponent noble metal alloy film having excellent compositional uniformity.

One object of the present disclosure is to solve the problems set forth above and provide a noble metal alloy powder having both high crystallinity and compositional uniformity. Another object of the present disclosure is to provide a noble metal alloy paste containing this noble metal alloy powder. Yet another object of the present disclosure is to provide a multicomponent noble metal alloy film having excellent compositional uniformity.

(Solution to Problem)

As a result of studies conducted to achieve the objects set forth above, the inventors discovered that by firing a slurry containing raw material powders after the pH of the slurry has been set as 8.0 or higher, it is possible to obtain a noble metal alloy powder having both high crystallinity and compositional uniformity. The present disclosure was completed based on this finding, and the primary features thereof are as follows.

1. A noble metal alloy powder comprising an alloy of 5 or more noble metal elements, wherein the noble metal alloy powder:

has an average particle diameter of 100 $\mu$m or less;
has a crystallite size of 60 nm or more; and
exhibits an X-ray diffraction spectrum in which a number of peaks observed in a diffraction angle 2θ range of 38° to 44° is 1.

2. The noble metal alloy powder according to the foregoing 1, wherein a coefficient of variation CV of content measured by energy dispersive X-ray spectroscopy is 0.2 or less for each of the noble metal elements.

3. The noble metal alloy powder according to the foregoing 1 or 2, wherein the average particle diameter is 10 $\mu$m or less.

4. The noble metal alloy powder according to the foregoing 1 or 2, wherein the average particle diameter is more than 10 $\mu$m and not more than 100 $\mu$m.

5. A noble metal alloy paste comprising: the noble metal alloy powder according to any one of the foregoing 1 to 4; a resin; and a solvent.

6. A noble metal alloy film obtained through application and firing of the noble metal alloy paste according to the foregoing 5.

7. A method of producing a noble metal alloy powder formed of an alloy of 5 or more noble metal elements, comprising:

a raw material preparation step of preparing the 5 or more noble metal elements separately to one another as raw materials with each in a form of a metal powder or a metal oxide powder;
a slurry production step of mixing the raw material powders, calcium carbonate, and water to obtain a slurry and setting a pH of the slurry as 8.0 or higher;
a mixing step of mixing the slurry;
a first firing step of firing the slurry in a non-oxidizing atmosphere to obtain an alloy powder;
a first acetic acid treatment step of treating the alloy powder with acetic acid; and
a first washing step of water washing and drying the alloy powder after the first acetic acid treatment step.

8. The method of producing a noble metal alloy powder according to the foregoing 7, further comprising a second firing step of firing the alloy powder after the first washing step in a non-oxidizing atmosphere.

9. The method of producing a noble metal alloy powder according to the foregoing 8, further comprising:

a third firing step of firing the alloy powder after the second firing step in a mixed state with calcium carbonate in a non-oxidizing atmosphere;
a second acetic acid treatment step of treating the alloy powder after the third firing step with acetic acid; and
a second washing step of water washing and drying the alloy powder after the second acetic acid treatment step.

10. A method of producing the noble metal alloy powder according to the foregoing 3 or 4, further comprising a particle size adjustment step of adjusting particle size of the alloy powder after the first washing step, prior to the second firing step.

11. A method of producing a noble metal alloy paste comprising mixing the noble metal alloy powder according to any one of the foregoing 1 to 4, a resin, and a solvent to obtain a paste.

12. A method of producing a noble metal alloy film comprising:

applying the noble metal alloy paste according to the foregoing 5 onto a substrate; and
firing the noble metal alloy paste that has been applied to obtain a noble metal alloy film.

(Advantageous Effect)

According to the present disclosure, it is possible to provide a noble metal alloy powder having both high crystallinity and compositional uniformity. Moreover, by using a noble metal alloy paste that contains this noble metal alloy powder, it is possible to obtain a noble metal alloy film having excellent compositional uniformity.

BRIEF DESCRIPTION OF THE DRAWINGS

In the accompanying drawings:

FIG. 1 is a flow chart illustrating a method of producing a noble metal alloy powder in a first embodiment of the present disclosure;
FIG. 2 is a flow chart illustrating a method of producing a noble metal alloy powder in a second embodiment of the present disclosure;
FIG. 3 is a flow chart illustrating a method of producing a noble metal alloy powder in a third embodiment of the present disclosure; and
FIG. 4 presents EDX maps illustrating the distributions of elements in Example No. 2, Comparative Example No. 10, and Comparative Example No. 11.

DETAILED DESCRIPTION

The following provides a specific description of embodiments of the present disclosure. It should be noted that the present disclosure is not limited to the embodiments described below.

[Noble metal alloy powder]

A noble metal alloy powder in one embodiment of the present disclosure is a noble metal alloy powder that is formed of an alloy of 5 or more noble metal elements and satisfies the following conditions (1) to (3).

(1) Average particle diameter of 100 $\mu$m or less
(2) Crystallite size of 60 nm or more
(3) X-ray diffraction spectrum in which the number of peaks observed in a diffraction angle 2θ range of 38° to 44° is 1

• Noble metal elements

Any noble metal elements can be used without any specific limitations as the constituent noble metals of the noble metal alloy powder according to the present disclosure. In other words, the noble metal alloy powder according to the present disclosure is a powder of an alloy formed of 5 or more elements selected from the group consisting of Au, Ag, Pt, Pd, Rh, Ir, Ru, and Os.

Note that among the noble metal elements mentioned above, Os has a property of readily volatilizing in a firing step. Therefore, from a viewpoint of ease of production, it is preferable that the noble metal alloy powder is a powder of an alloy formed of 5 or more elements selected from the group consisting of Au, Ag, Pt, Pd, Rh, Ir, and Ru.

The number of constituent noble metal elements of the alloy should be 5 or more, but no specific limitations are placed on the upper limit for the number of constituent noble metal elements. In other words, all 8 of the noble metal elements may be included. The number of noble metal elements may be 6 or may be 7.

The proportion (content) of each noble metal element contained in the noble metal alloy powder according to the present disclosure is not specifically limited and can be set as any value. For example, when a noble metal alloy powder that is formed of a high-entropy alloy such as previously described is to be produced, the proportions of noble metal elements contained in the noble metal alloy powder should be roughly equal values. Specifically, $\Delta C$, which is defined as the difference (Cmax - Cmin) between a largest content (Cmax) and a smallest content (Cmin) among contents (atom%) of all noble metal elements contained in the noble metal alloy powder, is preferably 10.0 atom% or less, more preferably 5.0 atom% or less, even more preferably 3.0 atom% or less, and most preferably 2.0 atom% or less. On the other hand, the lower $\Delta C$ is the better, and the lower limit may be 0 atom%.

• Average particle diameter: 100 $\mu$m or less

Through a subsequently described production method, it is possible to obtain noble metal alloy powders having a wide range of average particle diameters of 100 $\mu$m or less. Accordingly, the average particle diameter of the noble metal alloy powder is set as 100 $\mu$m or less. On the other hand, no specific limitations are placed on the lower limit for the average particle diameter. However, from viewpoints of ease of production and ease of handling, the average particle diameter is preferably 0.1 $\mu$m or more, and more preferably 0.2 $\mu$m or more.

Note that the noble metal alloy powder according to the present disclosure can be used in metal pastes and various other applications. Therefore, an average particle diameter that is suitable for the application can be adopted.

For example, in certain applications, a powder having a comparatively small average particle diameter can suitably be used. In such a case, the average particle diameter is preferably set as 10 $\mu$m or less, more preferably set as 5 $\mu$m or less, and even more preferably set as 3 $\mu$m or less. A fine noble metal alloy powder such as described above can even more suitably be used as a raw material of a metal paste, for example.

However, in a case in which the average particle diameter of the noble metal alloy powder is 10 $\mu$m or less, the noble metal alloy powder is not suitable for use in a 3D printer because particles have a high tendency to aggregate and fluidity of the powder is reduced. For example, when the powder is used in a powder bed-type additive manufacturing device, low powder fluidity makes it difficult to suitably perform squeezing. Therefore, it is preferable to set the average particle diameter as more than 10 $\mu$m in applications where fluidity is necessary such as in a 3D printer. On the other hand, when the average particle diameter is more than 100 $\mu$m, this results in reduced preciseness and increased surface roughness of a manufactured object when manufacturing is performed by a 3D printer. Therefore, the average particle diameter is preferably set as 80 $\mu$m or less, more preferably set as 50 $\mu$m or less, and even more preferably set as 20 $\mu$m or less.

Note that the average particle diameter of the noble metal alloy powder referred to here is defined as indicating the 50% particle diameter D50 in a cumulative particle size distribution by volume (i.e., the median diameter). The average particle diameter can be measured using a laser diffraction particle size analyzer.

• Crystallite size: 60 nm or more

The noble metal alloy powder according to the present disclosure has high crystallinity and, more specifically, has a crystallite size of 60 nm or more, and preferably 80 nm or more. On the other hand, the upper limit for the crystallite size is not specifically limited but may typically be 140 nm or less, or may be 120 nm or less.

The crystallite size can be determined from the full width at half maximum of a diffraction peak obtained through X-ray diffraction (XRD) measurement.

• Number of peaks in XRD spectrum: 1

In a situation in which noble metal elements contained in a powder are not sufficiently alloyed, a plurality of peaks originating from the various elements are observed in a diffraction angle $2\theta$ range of 38° to 44° in an X-ray diffraction spectrum. Therefore, in the present disclosure, the number of peaks observed in the range set forth above is stipulated as 1. When the number of peaks in the XRD spectrum is 1, uniform alloying can be said to have been achieved. Note that the reason that the diffraction angle $2\theta$ range in which the number of peaks is counted is set as 38° to 44° is that peaks for noble metal elements (Au, Ag, Pt, Pd, Rh, Ir, Ru, and Os) are observed in this range.

• Coefficient of variation CV of content measured by EDX

In the present disclosure, the coefficient of variation CV of content measured by energy dispersive X-ray spectroscopy (EDX) is preferably 0.2 or less, and more preferably 0.15 or less for each of the constituent metal elements of the noble metal alloy powder. Note that when the coefficient of variation CV is said to be 0.2 or less, this means that the coefficient of variation CV of content of each of the constituent noble metal elements of the noble metal alloy powder is 0.2 or less. According to the present disclosure, it is possible to obtain a noble metal alloy powder that is extremely uniform such that the coefficient of variation CV is 0.2 or less. On the other hand, no specific limitations are placed on the lower limit for the coefficient of variation CV because the lower the coefficient of variation CV is the better. Typically, the coefficient of variation CV may be 0.05 or more, or may be 0.08 or more.

When the coefficient of variation CV of content measured by EDX satisfies the condition set forth above, even more uniform alloying can be said to have been achieved.

• Average circularity coefficient

Although no specific limitations are placed on the shape of the noble metal alloy powder, it is desirable for the constituent particles of the powder to have high sphericity from a viewpoint of further increasing compatibility with applications such as 3D printing. Specifically, the average circularity coefficient of the constituent particles of the noble metal alloy powder is preferably 0.80 or more, more preferably 0.85 or more, even more preferably 0.90 or more, and most preferably 0.92 or more.

The average circularity coefficient referred to here is defined as a value determined by the following method. First, the subject noble metal alloy powder is observed under a microscope, and 100 particles are randomly selected from particles included in the field of view. Next, the area A and the perimeter P of each of the 100 selected particles are determined. The circularity coefficient φ of an individual particle can be calculated from the area A and the perimeter P of the particle by the following formula (1). The circularity coefficient φ is a dimensionless number.

$$\varphi = 4\pi A/P^2 \cdots (1)$$

The circularity coefficient of each of the 100 selected particles is calculated, and an average value of these circularity coefficients is taken to be the average circularity coefficient.

Although no specific limitations are placed on the upper limit for the average circularity coefficient, by definition, the value of the upper limit is 1. A circularity coefficient of 1 indicates that a particle is a perfect circle.

• Application

As described above, the noble metal alloy powder according to the present disclosure has both high crystallinity and compositional uniformity, and thus has excellent characteristics. The noble metal alloy powder according to the present disclosure can be used in any application without any specific limitations.

For example, the noble metal alloy powder according to the present disclosure can suitably be used as a component of a subsequently described noble metal alloy paste. Moreover, the noble metal alloy powder according to the present disclosure can suitably be used in the manufacture of a metal member by a 3D printer. The 3D printer can be any type of 3D printer without any specific limitations. For example, the 3D printer may be of a powder bed, directed energy deposition (DED), fused deposition modeling (FDM), arc welding, binder jet, supersonic deposition, or liquid metal jet printing type. In particular, the noble metal alloy powder according to the present disclosure can suitably be used as a material in additive manufacturing by a powder bed method.

[Method of producing noble metal alloy powder]

The following describes a method of producing a noble metal alloy powder according to the present disclosure. Note that the production method according to the present disclosure can be broadly classified as two methods: a method in which firing is only performed once; and a method in which firing is performed a plurality of times. The former is a method that is suitable for producing a powder having a comparatively small average particle diameter, whereas the latter is a method that is suitable for producing a powder having a comparatively large average particle diameter. Each of these production methods is described below.

• Production of powder having comparatively small average particle diameter

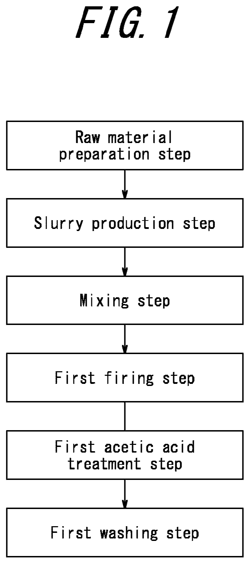

FIG. 1 is a flow chart illustrating a method of producing a noble metal alloy powder in one embodiment of the present disclosure. As illustrated in FIG. 1, the method of producing a noble metal alloy powder in one embodiment of the present disclosure includes the following steps (1) to (6) and is a production method in which firing is performed once.

    (1) Raw material preparation step
    (2) Slurry production step
    (3) Mixing step
    (4) First firing step
    (5) First acetic acid treatment step
    (6) First washing step

This production method is suitable for producing a powder having a comparatively small average particle diameter. Specifically, this production method is suitable for producing a powder having an average particle diameter of approximately 10 $\mu$m or less, is more suitable for producing a powder having an average particle diameter of 5 $\mu$m or less, and is even more suitable for producing a powder having an average particle diameter of 3 $\mu$m or less. The following provides a specific description of each step.

(1) Raw material preparation step

First, in the raw material preparation step, powders (raw material powders) that are to be used as raw materials for producing a noble metal alloy powder are prepared. A raw material powder is prepared separately for each of the constituent noble metal elements of the noble metal alloy that is to ultimately be produced. The number of noble metal elements should be 5 or more, but no specific limitations are placed on the upper limit for the number of noble metal elements. In other words, all 8 of the noble metal elements may be included. The number of noble metal elements may be 6 or may be 7. For example, in a case in which a five-component alloy is to be produced, 5 raw material powders should be prepared.

Although no specific limitations are placed on the particle diameter of the raw material powders, it is preferable to use fine raw material powders from a viewpoint of making the noble metal alloy powder that is ultimately obtained even more uniform. Specifically, the average particle diameter of each raw material powder that is used is preferably set as 1,000 nm or less, more preferably set as 500 nm or less, and even more preferably set as 100 nm or less. On the hand, the lower limit for the average particle diameter is not specifically limited and may be 1 nm or more, may be 5 nm or more, or may be 10 nm or more, for example.

Note that the average particle diameter of the raw material powder referred to here is defined as indicating the average particle diameter d that is determined from the specific surface area of the raw material powder using a perfect sphere model. The average particle diameter d ($\mu$m) is generally referred to as the BET diameter and, more specifically, can be calculated from the density $\rho$ (g/cm$^3$) of constituent particles of the raw material powder and the BET specific surface area s (m$^2$/g) by the following formula (2).

$$d = 6/\rho s \cdots (2)$$

Each raw material powder may be a metal powder or a metal oxide powder. For example, in the case of Pt, not only can Pt powder be used, but also platinum oxide ($PtO_2$) powder can be used. Likewise, oxide powders such as rhodium oxide ($RhO_2$, $RhO_3$) and palladium oxide (PdO) can freely be used. These oxide powders undergo thermal decomposition during firing to function as noble metal sources. Since there is fundamentally no change in terms of function as a raw material between a case in which a metal powder is used and a case in which a metal oxide powder is used, a metal powder or metal oxide powder should be selected according to ease of acquisition of the powder, etc.

However, in the case of Ru, it is preferable to use metal ruthenium powder as a raw material rather than ruthenium oxide ($RuO_2$) powder.

For example, in one embodiment of the present disclosure, it is preferable to use 5 or more types of powders selected from the group consisting of gold, silver, silver oxide, platinum, platinum oxide, palladium, palladium oxide, rhodium, ruthenium, rhodium oxide, iridium, iridium oxide, and osmium as raw material powders.

(2) Slurry production step

Next, the raw material powders, calcium carbonate, and water are mixed to obtain a slurry and the pH of the slurry is set as 8.0 or higher. The calcium carbonate thermally decomposes and at least some thereof is converted to calcium oxide in the firing step. Calcium carbonate and calcium oxide have an effect of impairing grain growth of a noble metal alloy, and thus contribute to micronization of the noble metal alloy powder that is ultimately obtained.

Although no specific limitations are placed on the additive amount of the calcium carbonate, the additive amount as a weight ratio relative to all raw material powders is preferably set as 0.1 times or more, more preferably set as 0.2 times or more, and even more preferably set as 0.5 times or more from a viewpoint of enhancing the above-described effect. On the other hand, although no specific limitations are placed on the upper limit for the additive amount, the effect reaches saturation when there is excessive addition. Consequently, the additive amount as a weight ratio relative to all raw material powders is preferably set as 10 times or less, more preferably set as 5 times or less, and even more preferably set as 2 times or less.

The calcium carbonate can be added in any form. Calcium carbonate powder is typically used. In a case in which calcium carbonate powder is used, the average particle diameter of the calcium carbonate powder is not specifically limited but is preferably set as 0.2 $\mu$m to 1.0 $\mu$m. Note that the average particle diameter of the calcium carbonate referred to here is defined as indicating the average particle diameter d that is determined from the specific surface area of the calcium carbonate using a perfect sphere model. The average particle diameter d ($\mu$m) is generally referred to as the BET diameter and, more specifically, can be calculated from the density $\rho$ (g/cm$^3$) of constituent particles of the calcium carbonate and the BET specific surface area s (m$^2$/g) by the following formula (2).

$$d = 6/\rho s \cdots (2)$$

pH: 8.0 or higher

It is important that the pH of the slurry is set as 8.0 or higher in the slurry production step. When the pH of the slurry is lower than 8.0, compositional uniformity decreases and the coefficient of variation CV in EDX measurement increases in the noble metal alloy powder that is ultimately obtained. Moreover, when the pH of the slurry is lower than 8.0, the number of peaks observed in a diffraction angle $2\theta$ range of 38° to 44° in an XRD spectrum cannot be set as 1.

No specific limitations are placed on the method by which the pH of the slurry is adjusted. For example, in a situation in which the pH is lower than 8.0, the pH may be adjusted through addition of an alkali to the slurry. The pH can be adjusted by, for example, adding one or more selected from the group consisting of an alkali metal hydroxide, an alkaline earth metal hydroxide, and ammonia to the slurry. The alkali metal hydroxide may be sodium hydroxide or potassium hydroxide, for example. The alkaline earth metal hydroxide may be calcium hydroxide, for example. Note that the pH of the slurry may be measured using a typical pH meter.

No specific limitations are placed on the upper limit for the pH of the slurry. However, the effect of yielding a more uniform alloy reaches saturation when the pH is higher than 10. Moreover, adjustment of the pH to higher than 10 requires the addition of a large amount of an alkali. This may result in a large amount of sodium, potassium, or the like that has been added as the alkali remaining as an impurity. Moreover, in a situation in which ammonia is used as the alkali, this is hazardous because it causes the evolution of a large amount of harmful ammonia gas in the production process. Therefore, it is preferable that the pH of the slurry is set as 10 or lower.

(3) Mixing step

In the mixing step, the slurry is mixed. The mixing can be performed using any mixer without any specific limitations. The mixer may be a ball mill, a planetary mill (planetary ball mill), a bead mill, an attritor, or the like, for example. From a viewpoint of more uniform mixing, it is preferable to use a bead mill or a planetary mill, of which, a bead mill is preferable.

(4) First firing step

Next, the slurry that has been mixed in the mixing step is fired in a non-oxidizing atmosphere to obtain an alloy powder. By obtaining the alloy powder through firing in the present disclosure, it is possible to achieve a higher purity than in a case in which a wet reduction method is adopted. The firing can be performed by any device without any specific limitations. An electric furnace can typically be used.

The first firing step is performed in a non-oxidizing atmosphere in order to prevent oxidation of components. Any atmosphere that is non-oxidizing can be adopted as the non-oxidizing atmosphere without any specific limitations. Typically, a nitrogen gas atmosphere, an argon gas atmosphere, an atmosphere formed of hydrogen gas and nitrogen gas, an atmosphere formed of hydrogen gas and argon gas, or the like can be used. From a viewpoint of reliably preventing oxidation of raw material, it is preferable to use an atmosphere that is formed of hydrogen gas and nitrogen gas or that is formed of hydrogen gas and argon gas.

The firing temperature in the first firing step (first firing temperature) is not specifically limited and can be set as any temperature so long as it is a temperature at which the powders can be fired. The preferred first firing temperature is dependent on the melting point $T_M$ determined by the composition of the used noble metal alloy. From a viewpoint of promoting diffusion of the raw material powders and further increasing crystallinity, the first firing temperature $T_1$ is preferably set as not lower than $T_L$ defined by the following formula. On the other hand, although no specific limitations are placed on the upper limit for the first firing temperature, an excessively high first firing temperature may result in the occurrence of necking between alloy particles and the formation of coarse powder. Therefore, the first firing temperature $T_1$ is preferably set as not higher than $T_H$ defined by the following formula.

$$T_L \ (°C) = T_M \ (K) \times 0.55 - 273.15$$

$$T_H \ (°C) = T_M \ (K) \times 0.77 - 273.15$$

$T_M$ referred to here is taken to be a weighted average of the melting points of all of the constituent noble metal elements of the noble metal alloy. The contents (mass%) of the noble metal elements are used to calculate this weighted average.

The firing time in the first firing step is not specifically limited but is preferably set as 1 hour or more from a viewpoint of alloy grain growth. On the other hand, the firing time is preferably set as 5 hours or less from a viewpoint of production efficiency.

(5) First acetic acid treatment step

Next, a fired material (alloy powder) that has been obtained through the first firing step is treated with acetic acid. The acetic acid treatment enables removal of calcium that is contained in the alloy powder. Note that in a situation in which an acid other than acetic acid (for example, hydrochloric acid or nitric acid) is used, not only calcium, but also noble metal elements dissolve, resulting in reduction of uniformity of the alloy. In contrast, dissolution of noble metal elements is not a concern with acetic acid irrespective of the concentration. Therefore, it is important that acetic acid is used for removal of calcium in the present disclosure.

Although no specific limitations are placed on the method of acetic acid treatment, the acetic acid treatment may typically be performed by stirring the alloy powder in an acetic acid aqueous solution to cause dissolution of calcium that is contained in the alloy powder. The acetic acid treatment can be performed any number of times so long as it is performed at least once. From a viewpoint of reducing the amount of calcium remaining as an impurity as much as possible, the acetic acid treatment is preferably performed at least twice, and is more preferably performed at least three times. On the other hand, although no specific limitations are placed on the upper limit for the number of times that the acetic acid treatment is performed, the number of times is preferably set as 10 or less, and more preferably set as 5 or less from a viewpoint of production efficiency. In a case in which the acetic acid treatment is performed a plurality of times, a new acetic acid aqueous solution is preferably used each time the acetic acid treatment is performed.

In the acetic acid treatment, the alloy powder may be loaded into an acetic acid aqueous solution that has been prepared in advance, or the alloy powder may first be loaded into pure water, and then acetic acid may be added to the pure water.

The following describes a specific example of a suitable acetic acid treatment method.

First, the alloy powder is loaded into pure water and is stirred. This converts calcium oxide that is contained in the alloy powder to calcium hydroxide. Next, acetic acid is further added and stirred therewith to cause dissolution of the calcium hydroxide. Thereafter, stirring is stopped, settling is performed to cause sedimentation of powder, and then the supernatant is removed. The above corresponds to one repetition of acetic acid treatment. The treatment described above can be repeated twice or more.

(6) First washing step

Next, the alloy powder after the first acetic acid treatment is water washed and dried (first washing step). The water washing removes acid and also calcium that is in a dissolved state in the acid.

The water washing is preferably performed using pure water. No specific limitations are placed on the method by which the water washing is performed. For example, after removal of the supernatant in the first acetic acid treatment, washing can be performed through addition and stirring of pure water. After the stirring has been stopped, settling is performed to cause sedimentation of powder, and then the supernatant is removed. The water washing is preferably repeated at least twice, and is more preferably repeated at least three times. On the other hand, although no specific limitations are placed on the upper limit for the number of times that the water washing is performed, the number of times is preferably set as 10 or less, and more preferably set as 5 or less from a viewpoint of production efficiency. After water washing, it is preferable that water and powder are separated by filtration and that the obtained powder is subjected to subsequent drying.

The drying can be performed by any method so long as it is a method by which water can be removed. Although natural drying may be used, heated drying is preferable in order to efficiently remove water. In the case of heated drying, the heating temperature is not specifically limited but is preferably set as 50°C or higher, and is more preferably set as 80°C or higher. The heating temperature may be 100°C or higher. On the other hand, although no specific limitations are placed on the upper limit for the heating temperature, an upper limit of 200°C or lower is typically preferable, and an upper limit of 150°C or lower is typically more preferable. The drying time is also not specifically limited and can be set as any time according to the amount of powder that is to be dried. From a viewpoint of sufficient drying, the drying time is preferably set as 1 hour or more, and is more preferably set as 5 hours or more. The drying time may be 10 hours or more. On the other hand, although no specific limitations are placed on the upper limit for the heating time, an upper limit of 100 hours or less is typically preferable, and an upper limit of 50 hours or less is typically more preferable.

Note that after drying, the resultant noble metal alloy powder is preferably further subjected to sieving. This makes it possible to break up particles that have aggregated in the process of washing.

Through the procedure set forth above, it is possible to obtain a noble metal alloy powder satisfying the conditions according to the present disclosure.

• Production of powder having comparatively large average particle diameter

The following describes a method of producing a noble metal alloy powder in another embodiment of the present disclosure. The production method of the present embodiment is a method that is suitable for producing a comparatively large powder having an average particle diameter of up to 100 $\mu$m. Specifically, this production method is suitable for producing a powder having an average particle diameter of more than 5 $\mu$m, and is more suitable for producing a powder having an average particle diameter of more than 10 $\mu$m.

In the production method of the present embodiment, firing is performed a plurality of times. The production method of the present embodiment can be further broadly classified as two methods: a method in which firing is performed twice; and a method in which firing is performed three times. Each of these methods is described below.

(Case in which firing is performed twice)

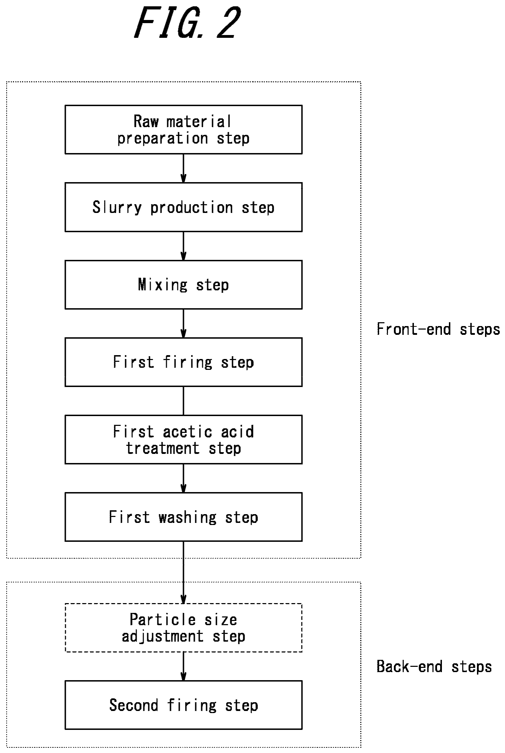

FIG. 2 is a flow chart illustrating the production method in a case in which firing is performed twice. As illustrated in FIG. 2, a method of producing a noble metal alloy powder in one embodiment of the present disclosure further includes a second firing step (7) in addition to steps (1) to (6) in the embodiment illustrated in FIG. 1.

Note that for convenience of description, steps from the raw material preparation step to the first washing step are referred to as "front-end steps" and steps after the first washing step are referred to as "back-end steps". Moreover, a particle size adjustment step may optionally be further included after the first washing step and before the second firing step. In a case in which a particle size adjustment step is implemented, the particle size adjustment step is considered to be included among back-end steps as illustrated in FIG. 2.

In the present embodiment, a powder having high crystallinity and excellent compositional uniformity is first produced in the front-end steps. However, the powder that is obtained at this stage is composed of comparatively small particles (primary particles). Moreover, these primary particles aggregate with one another to form roughly spherical aggregates (secondary particles), and these secondary particles have a particle diameter of the order of tens of micrometers to a hundred micrometers. By further performing treatment of back-end steps with respect to this powder, it is possible to further increase the average particle diameter while maintaining high crystallinity and compositional uniformity.

• Particle size adjustment step

In the back-end steps, the particle size of the alloy powder after the first washing step may be adjusted (particle size adjustment step) prior to the subsequent second firing step. By performing particle size adjustment, a noble metal alloy powder having a desired particle size can be obtained more easily. The particle diameter of the noble metal alloy powder that is ultimately obtained is roughly equal to the particle diameter of the powder after particle size adjustment (i.e., the powder that is subjected to the subsequent second firing step). Accordingly, in the particle size adjustment step, the particle size should be adjusted in accordance with the desired particle diameter of the noble metal alloy powder that is to ultimately be obtained.

Although no specific limitations are placed on the method by which the particle size is adjusted, the particle size adjustment may typically be performed through sieving of the alloy powder. Any sieve can be used without any specific limitations. Note that powder that has passed through the sieve (passed material) or powder that has not passed through the sieve (retained material) can be used. Moreover, the particle size of the alloy powder may be adjusted by performing sieving twice or more. For example, the alloy powder may first be sieved so as to collect powder that has passed through the sieve. This removes coarse grains in the alloy powder. The collected powder may then be further sieved using a sieve having even finer openings so as to collect powder remaining on the sieve. This removes excessively fine powder. Through sieving using two sieves having different openings in this manner, it is possible to obtain a powder having the desired particle size.

Sieving of the alloy powder can also yield an effect of spheroidization of powder particles in addition to the effect of particle size adjustment. This is thought to be due to alloy powder in the form of aggregates being subjected to mechanical force such as vibration, rolling, and friction on the sieve, thereby reducing unevenness of particle surfaces. Although the effect of spheroidization described above is obtained both for passed material and retained material, the effect is more noticeable for retained material. Therefore, from a viewpoint of enhancing the spheroidization effect, it is preferable that at least once in the particle size adjustment step, the alloy powder is sieved and powder that has not passed through the sieve (retained material) is used.

• Second firing step

Next, the alloy powder is subjected to firing for a second time (second firing step). Note that in a case in which particle size adjustment is not performed, the alloy powder after the first washing step should be fired, whereas in a case in which particle size adjustment is performed, the alloy powder after particle size adjustment should be fired. Prior to the second firing, the secondary particles are brittle and are easily broken up by physical contact or shock. Accordingly, performing second firing causes necking between primary particles forming the secondary particles and fixes the state of the particles.

Note that calcium carbonate is used to impair necking between secondary particles in a subsequently described third firing step. However, mixing with calcium carbonate prior to the second firing breaks up aggregation of the secondary particles and makes it difficult to control the particle size because the secondary particles are brittle prior to the second firing as described above. Therefore, by stabilizing the structure of the secondary particles by performing second firing and subsequently mixing the secondary particles with calcium carbonate, it is possible to more suitably control the particle size.

The temperature while the second firing is performed (second firing temperature) is not specifically limited and can be set as any temperature at which sintering between primary particles occurs. The preferred second firing temperature is dependent on the melting point $T_M$ determined by the composition of the used noble metal alloy. Therefore, the second firing temperature $T_2$ is preferably set as not lower than $T_L$ and not higher than $T_H$ defined by the following formulae.

$$T_L \ (°C) = T_M \ (K) \times 0.45 - 273.15$$

$$T_H \ (°C) = T_M \ (K) \times 0.60 - 273.15$$

$T_M$ referred to here is taken to be a weighted average of the melting points of all of the constituent noble metal elements of the noble metal alloy. The contents (mass%) of the noble metal elements are used to calculate this weighted average.

The time for which the second firing is performed (second firing time) is not specifically limited but is preferably set as 5 hours or less, and more preferably set as 2 hours or less. Moreover, the second firing time is preferably set as 30 minutes or more, more preferably set as 40 minutes or more, and even more preferably set as 50 minutes or more.

The second firing step is performed in a non-oxidizing atmosphere in order to prevent oxidation of components. Any atmosphere that is non-oxidizing can be adopted as the non-oxidizing atmosphere without any specific limitations. Typically, a nitrogen gas atmosphere, an argon gas atmosphere, an atmosphere formed of hydrogen gas and nitrogen gas, an atmosphere formed of hydrogen gas and argon gas, or the like can be used. From a viewpoint of reliably preventing oxidation of raw material, it is preferable to use an atmosphere that is formed of hydrogen gas and nitrogen gas or that is formed of hydrogen gas and argon gas.

(Case in which firing is performed three times)

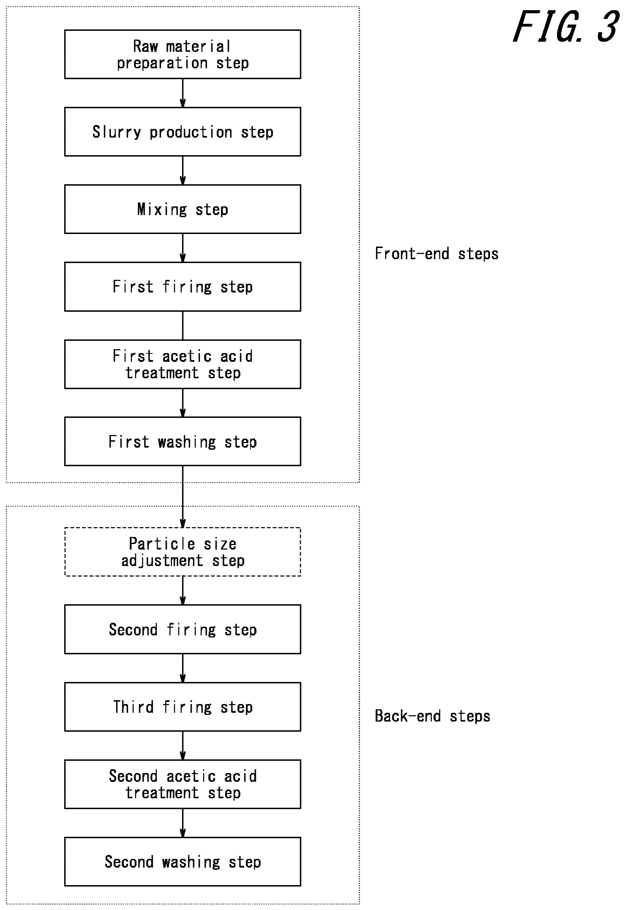

FIG. 3 is a flow chart illustrating the production method for a case in which firing is performed three times. As illustrated in FIG. 3, a method of producing a noble metal alloy powder in one embodiment of the present disclosure further includes a third firing step (8), a second acetic acid treatment step (9), and a second washing step (10) in addition to steps (1) to (7) in the embodiment illustrated in FIG. 2. The following describes each of steps (8) to (10). Note that in the present embodiment, a particle size adjustment step can optionally be performed after the first washing step and before the second firing step in the same manner as in the case illustrated in FIG. 2.

• Third firing step

The alloy powder after the second firing is further fired in a non-oxidizing atmosphere (third firing step). By performing two stages of firing with respect to the alloy powder obtained through the front-end steps in this manner, it is possible to cause stronger bonding between the constituent primary particles of the secondary particles and to further increase the sphericity of particles. The third firing can be performed by any device without any specific limitations. An electric furnace can typically be used.

In the third firing step, firing is performed in a mixed state with calcium carbonate serving as a sintering inhibitor in order to prevent bonding of secondary particles to one another to form coarse particles. The additive amount and form of the calcium carbonate are not specifically limited and can be the same as in the previously described first firing step.

The third firing step is performed in a non-oxidizing atmosphere in order to prevent oxidation of components. Any atmosphere that is non-oxidizing can be adopted as the non-oxidizing atmosphere without any specific limitations. Typically, a nitrogen gas atmosphere, an argon gas atmosphere, an atmosphere formed of hydrogen gas and nitrogen gas, an atmosphere formed of hydrogen gas and argon gas, or the like can be used. From a viewpoint of reliably preventing oxidation of raw material, it is preferable to use an atmosphere that is formed of hydrogen gas and nitrogen gas or that is formed of hydrogen gas and argon gas.

The firing temperature in the third firing step (third firing temperature) is not specifically limited and can be set as any temperature so long as it is a temperature at which the powder can be fired. The preferred third firing temperature is dependent on the melting point $T_M$ determined by the composition of the used noble metal alloy. The third firing temperature $T_3$ is preferably set as not lower than $T_L$ defined by the following formula. On the other hand, although no specific limitations are placed on the upper limit for the third firing temperature, an excessively high third firing temperature may result in the occurrence of necking between alloy particles and the formation of coarse powder. Therefore, the third firing temperature $T_3$ is preferably set as not higher than $T_H$ defined by the following formula.

$$T_L \ (°C) = T_M \ (K) \times 0.55 - 273.15$$

$$T_H \ (°C) = T_M \ (K) \times 0.77 - 273.15$$

$T_M$ referred to here is taken to be a weighted average of the melting points of all of the constituent noble metal elements of the noble metal alloy. The contents (mass%) of the noble metal elements are used to calculate this weighted average.

The firing time in the third firing step is not specifically limited but is preferably set as 1 hour or more. On the other hand, the firing time is preferably set as 5 hours or less from a viewpoint of production efficiency.

• Second acetic acid treatment step

Next, the alloy powder (fired material) after the third firing step is treated with acetic acid (second acetic acid treatment step). The acetic acid treatment enables removal of calcium that is contained in the fired material. Note that in a situation in which an acid other than acetic acid (for example, hydrochloric acid or nitric acid) is used, not only calcium, but also noble metal elements dissolve, resulting in reduction of uniformity of the alloy. In contrast, dissolution of noble metal elements is not a concern with acetic acid irrespective of the concentration. Therefore, it is important that acetic acid is used for removal of calcium in the present disclosure.

The conditions of the second acetic acid treatment step are not specifically limited and can be the same as in the previously described first acetic acid treatment step.

• Second washing step

The alloy powder after the second acetic acid treatment is water washed and dried (second washing step). The water washing enables removal of acetic acid and also calcium that is in a dissolved state in the acetic acid. The conditions of the second washing step are not specifically limited and can be the same as in the previously described first washing step.

Through the treatment set forth above, it is possible to obtain a noble metal alloy powder satisfying the conditions according to the present disclosure.

[Paste]

The following describes a noble metal alloy paste in one embodiment of the present disclosure. The noble metal alloy paste (hereinafter, also referred to simply as a "paste") in one embodiment of the present disclosure is a paste containing a noble metal alloy powder, a resin, and a solvent.

[Noble metal alloy powder]

The noble metal alloy powder that was previously described is used as the noble metal alloy powder. The entire disclosure in the description relating to the noble metal alloy powder is also applicable in the present embodiment.

• Average particle diameter

When a noble metal alloy powder contained in a paste is coarse, this results in a film that is obtained using the paste also being rough, and thus such a paste is not suitable for formation of a fine pattern or a thin film. Moreover, in a situation in which a plurality of films are stacked, increased surface roughness of a film may result in part of a lower layer film piercing through an upper layer film and acting as a cause of short circuiting. For this reason, the average particle diameter of the noble metal alloy powder that is contained in the paste is set as 100 μm or less, preferably 10 μm or less, more preferably 5 μm or less, and even more preferably 3 μm or less.

On the other hand, although no specific limitations are placed on the lower limit for the average particle diameter, excessively small particles may reaggregate even after they have been dispersed once in the solvent and make it more likely that coarse aggregated grains will form in the paste. The formation of coarse aggregated grains reduces stability of the paste and also causes roughening of a film that is obtained using the paste. Moreover, coarse aggregated grains cause problems such as screen clogging in screen printing and nozzle clogging of a dispenser during application by the dispenser. Furthermore, excessively small particles have a risk of ignition upon mixing with an organic solvent due to the catalytic effect of the noble metals. For this reason, the average particle diameter of the noble metal alloy powder is preferably 0.1 μm or more, and more preferably 0.2 μm or more.

The noble metal alloy powder that is used in the paste can be produced by the production method described above. In other words, the noble metal alloy powder can be produced through firing of raw material powders. Note that although wet reduction is also known as a method of producing a noble metal alloy powder, a powder that is obtained by wet reduction has low crystallinity and does not satisfy the crystallite size condition according to the present disclosure. Moreover, in a situation in which a powder obtained by wet reduction is used, there is significant contraction during firing of the applied paste, and breaking of a film may occur.

[Resin]

The following describes the resin that is one component of the noble metal alloy paste according to the present disclosure. The resin is a component that functions as a binder and that does not normally remain in a noble metal alloy film as a result of decomposing and being removed through firing after application.

Any resin can be used as the resin without any specific limitations. For example, the resin may be one or more selected from the group consisting of commonly known polyamides such as nylon 11, nylon 12, and nylon 6, acrylonitrile-styrene (AS) resin, acrylonitrile-butadiene-styrene (ABS) resin, acrylonitrile-ethylene-styrene (AES) resin, vinyl acetate resin, polystyrene, polyethylene, polypropylene, polyvinyl chloride, acrylic resin, methacrylic resin, polyvinyl alcohol resin, polyvinyl ether, polyacetal, polycarbonate, polyethylene terephthalate, polybutylene terephthalate, polyvinyl butyral, polysulfone, polyetherimide, ethyl cellulose, cellulose acetate, fluororesin, polyolefin elastomer, and saturated polyester resin. A plurality of resins can be used together. Of these examples, it is preferable to use ethyl cellulose as the resin because it does not influence other components during paste production or during firing of a film.

The content of the resin in the paste is not specifically limited and should be adjusted according to the mode of use of the paste, for example. Typically, the content of the resin in the paste is preferably set as 0.5 mass% or more, and more preferably set as 1.0 mass% or more. On the other hand, although no specific limitations are placed on the upper limit for the content, the content is preferably set as 10.0 mass% or less, and more preferably set as 7.0 mass% or less. Note that the content of the resin in the paste referred to here is a ratio of mass of the resin relative to total mass of the paste, expressed as a percentage.

[Solvent]

The noble metal alloy paste according to the present disclosure contains a solvent as another component. The solvent does not normally remain in a noble metal alloy film because it volatilizes after application of the paste.

Although any solvent can be used as the solvent without any specific limitations, it is preferable to use a solvent having a boiling point of 300°C or lower. An organic solvent is typically used as the solvent. For example, an acetate, an ether, a hydrocarbon, or the like can be used as the solvent. More specifically, it is preferable to use one or more selected from dibutyl carbitol, butyl carbitol acetate, texanol, ethylene glycol, propylene glycol, ethylene glycol monophenyl ether, benzyl alcohol, kerosene, paraffin, γ-butyrolactone, N-methylpyrrolidone, butyl carbitol, turpentine oil, α-terpineol, terpineol, and terpinyl acetate.

The noble metal alloy paste in one embodiment of the present disclosure may be a noble metal alloy paste that is formed of the noble metal alloy powder, the resin, and the solvent. Moreover, a noble metal alloy paste in another embodiment may optionally further contain additional components. For example, the noble metal alloy paste can contain one or more selected from the group consisting of a surfactant, a thickener, a plasticizer, and an inorganic filler as additional components.

• Surfactant

The surfactant functions as a dispersant and improves stability of solid matter in the paste. In addition, the surfactant also acts to improve wettability during application of the paste. Any surfactant can be used as the surfactant without any specific limitations. The surfactant may be a cationic surfactant, an anionic surfactant, an amphoteric surfactant, or a non-ionic surfactant. In particular, an anionic surfactant is preferable, and a diamine-based anionic surfactant is more preferable.

• Thickener

An organic thickener can be added in order to adjust the viscosity of the paste. Any thickener can be used as the thickener without any specific limitations. The thickener may be either or both of an organic thickener and an inorganic thickener.
Examples of organic thickeners that can be used include dibenzylidene-D-sorbitol (1,3:2,4-bis-O-benzylidene-D-glucitol) and also any other organic thickeners such as those based on hydrogenated castor oil, amide wax, oxidized polyethylene, polymerized products of vegetable oil, and surfactants. For example, examples of organic thickeners that are vegetable oil derivatives used as thickeners for paints, inks, and so forth include Devisol, Rilanit HT, and Rilanit Special (all produced by Henkel Hakusui Corporation). Moreover, examples of inorganic thickeners that may be used include ultrafine powders (powders having an average particle diameter of 0.1 $\mu$m or less) of alumina and silica, bentonite, and calcium carbonate.

• Plasticizer

A phthalic acid-based plasticizer or a non-phthalic acid-based plasticizer can be used as the plasticizer. Any phthalic acid ester can be used as the phthalic acid-based plasticizer without any specific limitations. The phthalic acid ester may be bis(2-ethylhexyl) phthalate (DEHP), diisononyl phthalate (DINP), or the like, for example. Moreover, the non-phthalic acid-based plasticizer may be an adipic acid-based plasticizer (adipic acid ester), a phosphoric acid-based plasticizer (phosphoric acid ester), a trimellitic acid-based plasticizer (trimellitic acid ester), or the like, for example.
Any powder of an inorganic material can be used as the inorganic filler without any specific limitations. It is preferable to use one or more selected from the group consisting of glass powder, ceramic powder, and metal oxide powder as the inorganic filler. From a viewpoint of improving close adherence, the inorganic filler preferably includes a powder that is formed of the same material as a material contained in a substrate onto which the paste is to be applied. Moreover, in a situation in which an inorganic filler having a higher melting point than the noble metal alloy powder is used, the inorganic filler can function as a sintering inhibitor.
Any powder formed of a glass can be used as the glass powder without any specific limitations. The glass may be borosilicate glass, for example. The particle diameter of the glass powder is preferably 0.1 $\mu$m to 5.0 $\mu$m. Moreover, from a viewpoint of improving close adherence when the paste is applied onto a substrate to form a film, the softening point (Ts) of the glass powder is preferably 400°C to 700°C, and is preferably 450°C to 650°C.
Any powder formed of a ceramic can be used as the ceramic powder without any specific limitations. A $ZrO_2$-containing ceramic, for example, can be used as the ceramic. The $ZrO_2$-containing ceramic is preferably stabilized zirconia. The $ZrO_2$-containing ceramic may further contain an oxide having ion conductivity. The oxide having ion conductivity may be an oxide of one or more selected from the group consisting of La, Ce, Pr, Nd, Sm, and Hf, for example.
One or more powders selected from the group consisting of nickel oxide, tantalum oxide, niobium oxide, aluminum oxide, zirconium oxide, yttrium oxide, magnesium oxide, silicon oxide, titanium oxide, manganese oxide, calcium oxide, bismuth oxide, copper oxide, yttrium oxide, zirconium oxide, and zinc oxide, for example, can be used as the metal oxide powder.
Although no specific limitations are placed on the average particle diameter of the inorganic filler, the average particle diameter is preferably 0.1 $\mu$m to 10 $\mu$m from a viewpoint of dispersibility. The average particle diameter is more preferably 5 $\mu$m or less, and even more preferably 3 $\mu$m or less.
Note that the average particle diameter of the inorganic filler referred to here is defined as indicating the 50% particle diameter D50 in a cumulative particle size distribution by volume (i.e., the median diameter). The average particle diameter can be measured using a laser diffraction particle size analyzer. Measurement of the average particle diameter of the inorganic filler can be performed by the same method as for the average particle diameter of the noble metal alloy powder.

(Solid content)

No specific limitations are placed on the content of each component in the paste according to the present disclosure. However, an obtained film may become too thin in a situation in which the solid content is too low. Therefore, the solid content of the paste is preferably 50 mass% or more. On the other hand, formation of a paste may be difficult in a situation in which the solid content is too high. Therefore, the solid content of the paste is preferably 90 mass% or less.

[Method of producing paste]

The following describes a suitable method of producing the noble metal alloy paste set forth above. The noble metal alloy paste can be produced by mixing a noble metal alloy powder that satisfies the previously described conditions, a resin, and a solvent.

The mixing can be performed by any method without any specific limitations. From a viewpoint of uniformly dispersing the noble metal alloy powder in the paste, it is preferable that the components are kneaded after being mixed. The kneading can be performed by various types of devices such as a sand mill, a roll mill, a ball mill, a colloid mill, a jet mill, a bead mill, a kneader, a homogenizer, and a propeller-less mixer, for example. Of these devices, a roll mill is preferable. A two-roll mill, a three-roll mill, or the like can be used as the roll mill, for example, with the use of a three-roll mill being preferable.

Filtration can optionally be performed after the kneading. The filtration enables removal of aggregated material and foreign substances that are contained in the paste. The filtration can be performed using any filtration device for a paste.

Viscosity adjustment can optionally be further performed after the filtration. In a situation in which viscosity adjustment is performed, the viscosity of the paste may be measured using a viscometer, and the paste may be adjusted to a desired viscosity through addition of a solvent or resin, for example. Addition of a solvent lowers the viscosity, whereas addition of a resin raises the viscosity.

The viscosity of the paste is not specifically limited and should be adjusted as appropriate depending on the application in which the paste is to be used, for example. However, it is difficult to apply the paste onto a substrate in a situation in which the viscosity is too high. Therefore, the viscosity of the paste is preferably 500 Pa·s or less, and more preferably 400 Pa·s or less. On the other hand, an obtained film may become too thin in a situation in which the viscosity is too low. Therefore, the viscosity of the paste is preferably 1 mPa·s or more, and more preferably 5 mPa·s or more.

Note that since the optimum paste viscosity differs depending on the application method, it is preferable that the paste is adjusted in advance to a viscosity that is suitable for an anticipated application method of the paste. Examples of viscosities that are suitable for application methods are given below.

- Screen printing: 100 Pa·s to 400 Pa·s
- Spray coating: 1 mPa·s to 100 mPa·s
- Inkjet: 1 mPa·s to 50 mPa·s
- Dispensing: 1 Pa·s to 200 Pa·s

[Noble metal alloy film]

The following describes a metal alloy film in one embodiment of the present disclosure. The noble metal alloy film is a noble metal alloy film that is obtained through application and firing of the noble metal alloy paste set forth above. The noble metal alloy film obtained in this manner is a film that is formed of the alloy of 5 or more noble metal elements that was contained in the used noble metal alloy powder. Moreover, this noble metal alloy film has excellent compositional uniformity. Typically, the number of peaks observed in a diffraction angle 2θ range of 38° to 44° in an X-ray diffraction spectrum is 1.

[Method of producing noble metal alloy film]

The noble metal alloy film can be produced by applying the noble metal alloy paste onto a substrate and firing the noble metal alloy paste that has been applied. Although the paste can be applied onto the substrate by any method without any specific limitations, it is preferable to use a technique that enables application as a pattern such as screen printing. Moreover, no specific limitations are placed on the substrate that is the target of application, and the paste can be applied onto any substrate.

After the paste has been applied, it is preferable that drying is performed prior to firing in order to volatilize the solvent that is contained in the applied paste. The drying temperature is not specifically limited and should be set in accordance with the type of solvent that is used. The preferred drying temperature is 50°C to 200°C. Although the drying can be performed in any atmosphere, the drying is typically performed in air.

Next, firing is performed. The firing causes sintering between particles of the noble metal alloy powder that was contained in the paste to thereby form a noble metal alloy film. During this firing, the resin that was contained in the paste decomposes and is removed.

The firing is preferably performed in two stages. First, the resin contained in the paste is eliminated in a first stage firing step (debinding). The first stage firing step can be performed in air.

The firing temperature in the first stage firing step should be adjusted according to the type and formulation of the resin that is used, but is preferably set as 200°C or higher. On the other hand, the firing temperature is preferably set as 500°C or lower, and more preferably set as 400°C or lower from a viewpoint of preventing oxidation of noble metal elements.

Thereafter, firing is caused to progress in a second stage firing step. The second stage firing step can be performed in a non-oxidizing atmosphere. Any atmosphere that is non-oxidizing can be adopted as the non-oxidizing atmosphere without any specific limitations. Typically, a nitrogen gas atmosphere, an argon gas atmosphere, an atmosphere formed of hydrogen gas and nitrogen gas, an atmosphere formed of hydrogen gas and argon gas, or the like can be used. From a viewpoint of reliably preventing oxidation of raw material, it is preferable to use an atmosphere that is formed of hydrogen gas and nitrogen gas or that is formed of hydrogen gas and argon gas.

The firing temperature in the second stage firing step is preferably 1000°C or higher, and more preferably 1300°C or higher in order to cause progression of firing. On the other hand, the firing temperature is preferably 1500°C or lower because the effect reaches saturation when the firing temperature is excessively high.

EXAMPLES

The following provides a more specific description of effects according to the present disclosure through examples and comparative examples of the present disclosure, but the present disclosure in not limited thereto.

(Working Example 1)

First, five-component noble metal alloy powders formed of Ru, Rh, Pd, Ir, and Pt were produced by the following procedure.

[Front-end steps]

Powders of Pt, Pd, $IrO_2$, Ru, and Rh were prepared as raw material powders. Among these powders, Pt black, Pd black, and Rh black were respectively used as powders of Pt, Pd, and Rh. Moreover, the Ru powder was produced through reduction of $RuO_2$ powder.

The raw material powders were mixed with calcium carbonate powder and water (pure) to obtain a slurry. During mixing, an alkali for pH adjustment was added in order to set the pH of the slurry as indicated in Table 1. Note that in Examples Nos. 1 and 2 and Comparative Examples Nos. 10 and 11, powders having different particle diameters and crystallite sizes were obtained by altering conditions in the slurry production step (pH of slurry and amounts of calcium carbonate and water). For example, in Example No. 2, the additive amount of calcium carbonate was set as a weight ratio of 0.8 times relative to the total amount of raw material powders, and the additive amount of water was set as a weight ratio of 2 times relative to the total of raw material powders and calcium carbonate powder.

Next, the slurry was mixed in a planetary ball mill. The mixing conditions were set as a rotation speed of 200 rpm and a mixing time of 6 hours. Moreover, a polyamide pot was used as a mixing vessel and polyamide balls of 10 mm in diameter were used as media.

The slurry after mixing was fired in an $N_2/H_2$ atmosphere to obtain an alloy powder. Specifically, the slurry was first dried at 130°C in a dryer to remove water and obtain a mixed powder. Next, the mixed powder was loaded into a crucible and was fired. The firing was performed using an atmosphere-type heating electric furnace. The atmosphere during firing was set as a 3% $H_2$/97% $N_2$ gas atmosphere, the firing temperature was set as 1300°C, and the firing time was set as 5 hours.

Next, the alloy powder that was obtained through the firing step was subjected to acetic acid treatment and was subsequently washed with pure water and dried.

(Acetic acid treatment)

The acetic acid treatment was performed three times by the following procedure. First, the fired material (alloy powder) was loaded into pure water and was stirred. This converted calcium oxide contained in the fired material to calcium hydroxide. Next, acetic acid was further added and stirred therewith to cause dissolution of the calcium hydroxide. Thereafter, stirring was stopped, settling was performed to cause sedimentation of powder, and then the supernatant was removed. The above corresponds to one repetition of acetic acid treatment. Thereafter, further addition and stirring of pure water and acetic acid, settling, and supernatant removal were repeated twice.

Next, washing with pure water was performed three times by the following procedure. First, once the supernatant had been removed in the third repetition of acetic acid treatment, pure water was added and stirred. After the stirring had been stopped, settling was performed to cause sedimentation of powder, and then the supernatant was removed. Three repetitions of the washing described above were performed.

(Drying)

After the washing, water and powder were separated by filtration, and the obtained powder was dried. The drying was performed at 130°C for 12 hours.

The powder after drying was sieved to cause disintegration of aggregated powder. A test sieve made of stainless steel that had an opening size of 125 $\mu$m was used as the sieve. Note that all particles passed through the sieve without remaining on the sieve.

[Back-end steps]

In Examples Nos. 4 to 9, back-end steps were performed by the following procedure to obtain a noble metal alloy powder having a larger average particle diameter.

(Particle size adjustment step)

The alloy powder obtained through the front-end steps was subjected to particle size adjustment. The particle size adjustment was performed under the following conditions using test sieves made of stainless steel. However, for the purpose of comparison, particle size adjustment was not performed in Example No. 6.

- Examples Nos. 5, 7, 8, and 9: The alloy powder was sieved using a sieve having an opening size of 53 $\mu$m, and powder remaining on the sieve was subjected to a subsequent second firing step.
- Example No. 4: The alloy powder was sieved using a sieve having an opening size of 53 $\mu$m, and powder that passed through the sieve was further sieved using a sieve having an opening size of 38 $\mu$m. Powder that passed through the sieve having an opening size of 38 $\mu$m was further sieved using a sieve having an opening size of 20 $\mu$m, and powder remaining on the sieve was subjected to a subsequent second firing step.

(Second firing step)

Next, the alloy powder after the particle size adjustment step was subjected to second firing in a non-oxidizing atmosphere. The second firing was performed using an atmosphere-type heating electric furnace with the alloy powder loaded into a crucible. The atmosphere during firing was set as a 100% $N_2$ gas atmosphere, the second firing temperature was set as 1000°C, and the second firing time was set as 1 hour. However, for the purpose of comparison, the second firing temperature was set as 800°C in Example No. 5 and was set as 1100°C in Example No. 9.

(Third firing step)

Next, the powder after the second firing step was subjected to third firing in a state in which the powder was further mixed with calcium carbonate. Specifically, the powder after the second firing step was first mixed with calcium carbonate powder to obtain a mixed powder. The additive amount of calcium carbonate during this mixing was set as a volume ratio of 5 times relative to the powder. The mixing was performed for 1 minute in a powder mixer. Next, the mixed powder was loaded into a crucible and was fired in a non-oxidizing atmosphere. The firing was performed using an atmosphere-type heating electric furnace. The atmosphere during firing was set as a 100% $N_2$ gas atmosphere, the third firing temperature was set as 1300°C, and the third firing time was set as 5 hours.

However, for the purpose of comparison, the third firing step and subsequent steps were not performed in Example No. 7.

(Second acetic acid treatment step)

Next, the alloy powder that was obtained through the firing step was subjected to second acetic acid treatment. The second acetic acid treatment was performed three times by the following procedure in the same way as in the first acetic acid treatment step. First, the fired material (alloy powder) was loaded into pure water and was stirred. This converted calcium oxide contained in the fired material to calcium hydroxide. Next, acetic acid was further added and stirred therewith to cause dissolution of the calcium hydroxide. Thereafter, stirring was stopped, settling was performed to cause sedimentation of powder, and then the supernatant was removed. The above corresponds to one repetition of acetic acid treatment. Thereafter, further addition and stirring of pure water and acetic acid, settling, and supernatant removal were repeated twice.

(Second washing step)

Next, washing with pure water in the same way as in the first washing step was performed three times by the following procedure. First, once the supernatant had been removed in the third repetition of acetic acid treatment, pure water was added and stirred. After the stirring had been stopped, settling was performed to cause sedimentation of powder, and then the supernatant was removed. Three repetitions of the washing described were performed. After the washing, water and powder were separated by filtration, and the obtained powder was dried. The drying was performed at 130°C for 12 hours.

Next, the average particle diameter, the crystallite size, the number of peaks in an XRD spectrum, and the coefficient of variation CV in EDX were measured by the following procedures for each of the obtained noble metal alloy powders. The measurement results are shown in Table 1.

(Average particle diameter)

The average particle diameter of each of the obtained noble metal alloy powders was measured using a laser diffraction particle size analyzer MT-3000 produced by MicrotracBEL Corp. Specifically, the alloy powder was added to a sodium hexametaphosphate aqueous solution that circulated inside of the particle size analyzer, was dispersed for 1 minute by ultrasonication, and then a particle size distribution was measured. The determined 50% particle diameter (D50) by volume was taken to be the average particle diameter of the noble metal alloy powder.

(Crystallite size)

The crystallite size of each of the obtained noble metal alloy powders was measured by an X-ray diffractometer Ultima IV produced by Rigaku Corporation. In this measurement, the powder serving as a measurement subject was loaded into a glass cell for powder measurement to obtain a sample. The measurement conditions were set as a Cu target, a tube voltage of 40 kV, a tube current of 40 mA, a scan range of 10° to 100°, a sampling interval of 0.02°, and a scan speed of 30°/min. The crystallite size was calculated by the Scherrer equation from the full width at half maximum of a diffraction peak obtained through the measurement.

(Number of peaks in XRD spectrum)

With respect to the XRD spectrum obtained in measurement of crystallite size described above, the number of peaks observed in a diffraction angle 2θ range of 38° to 44° was determined. Note that in counting of the number of peaks, peak separation of XRD peaks was performed by Gaussian fitting, and peaks having a peak width of at least 0.1° and also having a peak intensity of at least 1/100th of that of the maximum peak were regarded as peaks.

(Coefficient of variation CV in EDX)

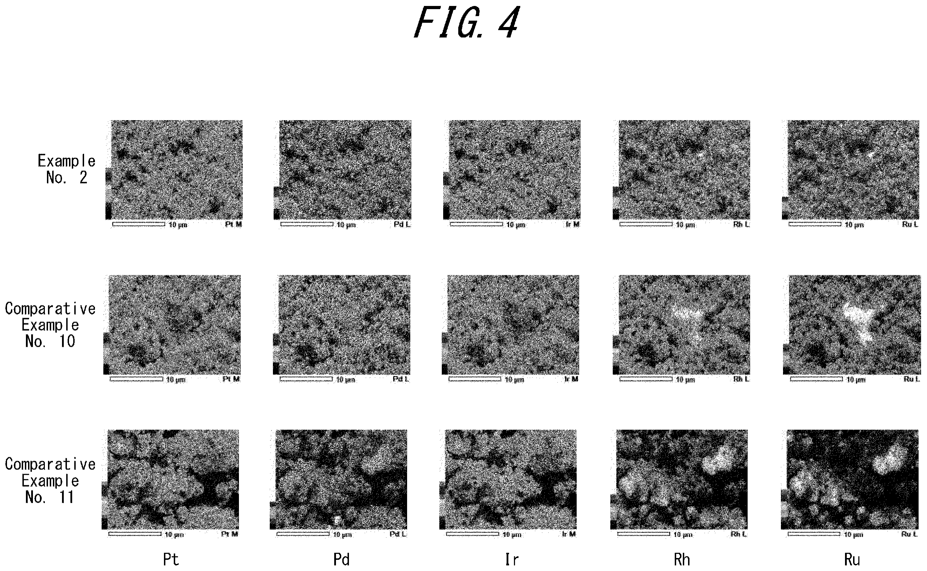

The coefficient of variation CV of content of each noble metal element contained in each of the obtained noble metal alloy powders was calculated from measurement results of energy dispersive X-ray spectroscopy. This measurement was performed using a scanning electron microscope (SEM)-energy dispersive X-ray analyzer (EDX) JSM-6010LA produced by JEOL Ltd. and with the alloy powder fixed on carbon tape as a measurement sample. The measurement conditions were set as a magnification of ×3,000 and an accelerating voltage of 20 kV. EDX quantitative measurement was performed at 30 randomly selected points under these conditions to determine the content of each noble metal element. The coefficient of variation CV was calculated from the average and standard deviation of the determined contents. Distributions of elements determined by EDX measurement for the powders of Example No. 2, Comparative Example No. 10, and Comparative Example No. 11 are presented in FIG. 4 for reference.

[Table 1]

| No. | Noble metal alloy powder | | | | | | | | | | | | Note |
| | Production conditions | | | | Measurement results | | | | | | | | |
| | pH of slurry | First firing | Second firing | Third firing | Average particle diameter ($\mu$m) | Crystallite size (nm) | XRD number of peaks | EDX coefficient of variation CV | | | | | |
| | | | | | | | | Ru | Rh | Pd | Ir | Pt | |
| 1 | 9.0 | Yes | - | - | 0.1 | 75.3 | 1 | 0.058 | 0.047 | 0.05 | 0.066 | 0.044 | Example |
| 2 | 9.0 | Yes | - | - | 1.1 | 90.7 | 1 | 0.148 | 0.106 | 0.132 | 0.133 | 0.100 | Example |
| 3 | 9.0 | Yes | Yes | Yes | 10.0 | 77.2 | 1 | 0.074 | 0.059 | 0.074 | 0.084 | 0.057 | Example |
| 4 | 9.0 | Yes | Yes | Yes | 25.8 | 70.9 | 1 | 0.095 | 0.077 | 0.093 | 0.112 | 0.074 | Example |
| 5 | 9.0 | Yes | Yes | Yes | 52.5 | 120.3 | 1 | 0.085 | 0.070 | 0.111 | 0.045 | 0.050 | Example |
| 6 | 9.0 | Yes | Yes | Yes | 85.7 | 100.4 | 1 | 0.043 | 0.030 | 0.037 | 0.050 | 0.034 | Example |
| 7 | 9.0 | Yes | Yes | - | 90.3 | 68.4 | 1 | 0.074 | 0.042 | 0.068 | 0.059 | 0.048 | Example |
| 8 | 9.0 | Yes | Yes | Yes | 94.9 | 127.9 | 1 | 0.099 | 0.057 | 0.105 | 0.113 | 0.069 | Example |
| 9 | 9.0 | Yes | Yes | Yes | 99.7 | 124.3 | 1 | 0.043 | 0.062 | 0.045 | 0.039 | 0.074 | Example |
| 10 | 7.0 | Yes | - | - | 1.2 | 50.8 | 2 | 0.134 | 0.063 | 0.128 | 0.108 | 0.089 | Comparative Example |
| 11 | 5.9 | Yes | - | - | 0.9 | 49.3 | 4 | 1.420 | 0.370 | 0.318 | 0.424 | 0.218 | Comparative Example |
| 12 | Mixed powder | | Yes | Yes | - | - | 9 | 2.03 | 0.87 | 1.56 | 0.21 | 0.79 | Comparative Example |

It can be seen from the results shown in Table 1 and FIG. 4 that according to the present disclosure, it is possible to provide a noble metal alloy powder having both high crystallinity and compositional uniformity. In contrast, crystallinity and compositional uniformity were poor in powders of comparative examples where the pH of the slurry did not satisfy the condition according to the present disclosure.

For the purpose of comparison, a noble metal alloy powder was produced using a mixed powder (Comparative Example No. 12) instead of the alloy powder obtained by the front-end steps described above. The mixed powder was obtained by mixing Ru powder, Rh powder, Pd powder, Ir powder, and Pt powder such that each noble metal element was an equiatomic quantity. Other conditions were the same as in Example No. 8. Results for the number of peaks in an XRD spectrum and the coefficient of variation CV in EDX that were measured with respect to the obtained alloy powder are also shown in Table 1.

This result demonstrates that by simply mixing and firing a plurality of noble metal powders, it is not possible to obtain a noble metal alloy powder having both high crystallinity and compositional uniformity as in the present disclosure. Note that in Comparative Example No. 12, a plurality of peaks were observed in the XRD spectrum used for calculation of crystallite size. Therefore, the crystallite size cannot be unambiguously determined and is not shown in Table 1. Moreover, measurement of the average particle diameter was omitted for the powder of Comparative Example No. 12 because it clearly did not satisfy the conditions according to the present disclosure. However, based on external appearance of the powder, the average particle diameter of the powder of Comparative Example No. 12 appeared to be roughly the same as that in Example No. 2.

(Working Example 2)

Noble metal alloy powders obtained in Working Example 1 were used to produce noble metal alloy pastes that were then used to produce noble metal alloy films. The specific procedure was as follows.

<Production of paste>

The noble metal alloy powders of Examples Nos. 1 to 3 were used to produce pastes by the following procedure as representative examples.

First, the noble metal alloy powder, a resin, and a solvent were each weighed out such that the contents thereof in a final paste would be 80 mass% of the noble metal alloy powder, 1.8 mass% of the resin, and 18.2 mass% of the solvent and were then mixed into the form of a paste. Ethyl cellulose and texanol were used respectively as the resin and the solvent.

Next, the obtained paste was kneaded using a three-roll mill to cause sufficient dispersion of each component and complete the paste (Samples a to c).

For the purpose of comparison, a paste (Sample d) was also produced using a mixed powder instead of the noble metal alloy powder. The mixed powder was obtained by mixing Ru powder, Rh powder, Pd powder, Ir powder, and Pt powder such that each noble metal element was an equiatomic quantity. Other conditions were the same as those for Samples a to c.

<Production of noble metal alloy film>

Next, each of the obtained pastes (Samples a to d) was used to produce a noble metal alloy film by the following procedure.

First, the paste was applied as a film onto an alumina substrate by screen printing. Next, drying was performed at 120°C to volatilize the solvent contained in the applied paste. Next, an electric furnace was used to perform firing at 400°C in an air atmosphere to cause decomposition and removal of the resin in the paste (first stage firing step). Thereafter, an atmosphere-type heating electric furnace was used to perform further firing at 1500°C in a nitrogen atmosphere to obtain a noble metal alloy film (second stage firing).

<Evaluation of noble metal alloy film>

The crystallite size, the number of peaks in an XRD spectrum, and the coefficient of variation CV in EDX were measured by the following procedures with respect to each of the obtained noble metal alloy films. The measurement results are shown in Table 2.

(Number of peaks in XRD spectrum)

An XRD spectrum of each of the obtained noble metal alloy films was measured by an X-ray diffractometer Ultima IV produced by Rigaku Corporation. The measurement conditions were set as a Cu target, a tube voltage of 40 kV, a tube current of 40 mA, a scan range of 10° to 100°, a sampling interval of 0.02°, and a scan speed of 30°/min. In the obtained XRD spectrum, the number of peaks observed in a diffraction angle 2θ range of 38° to 44° was determined. Note that in counting of the number of peaks, peak separation of XRD peaks was performed by Gaussian fitting, and peaks having a peak width of at least 0.1° and also having a peak intensity of at least 1/100th of that of the maximum peak were regarded as peaks.

(Coefficient of variation CV in EDX)

The coefficient of variation CV of content of each noble metal element contained in each of the obtained noble metal alloy films was calculated from measurement results of energy dispersive X-ray spectroscopy. A scanning electron microscope (SEM)-energy dispersive X-ray analyzer (EDX) JSM-6010LA produced by JEOL Ltd. was used in this measurement. The measurement was performed with the alumina substrate and the film formed on the substrate fixed on a sample stage by carbon tape. The measurement conditions were set as a magnification of ×3,000 and an accelerating voltage of 20 kV. EDX quantitative measurement was performed at 30 randomly selected points under these conditions to determine the content of each noble metal element. The coefficient of variation CV was calculated from the average and standard deviation of the determined contents.

[Table 2]

| Sample ID | Noble metal alloy film | | | | | | | Note |
|---|---|---|---|---|---|---|---|---|
| | Used powder | Measurement results | | | | | | |
| | | XRD number of peaks | EDX coefficient of variation | | | | | |
| | | | Ru | Rh | Pd | Ir | Pt | |
| a | No. 1 | 1 | 0.051 | 0.042 | 0.053 | 0.040 | 0.029 | Example |
| b | No. 2 | 1 | 0.022 | 0.028 | 0.025 | 0.025 | 0.025 | Example |
| c | No. 3 | 1 | 0.029 | 0.022 | 0.027 | 0.028 | 0.020 | Example |
| d | **Mixed powder** | 17 | 0.224 | 0.192 | 0.301 | 0.772 | 0.222 | **Comparative Example** |

It can be seen from the results illustrated in Table 2 that for noble metal alloy films obtained using pastes according to the present disclosure, the number of peaks in an XRD spectrum was 1 and the coefficient of variation CV in EDX was 0.2 or less for each of the 5 noble metal elements. This indicates that the noble metal alloy elements are completely alloyed in the noble metal alloy films and that compositional uniformity is extremely high. In contrast, it can be seen that alloying did not sufficiently progress and that there is a nonuniform composition in the noble metal alloy film of Sample d in which the mixed powder was used.

**Claims**

1. A noble metal alloy powder comprising an alloy of 5 or more noble metal elements, wherein the noble metal alloy powder:

   has an average particle diameter of 100 μm or less;
   has a crystallite size of 60 nm or more; and
   exhibits an X-ray diffraction spectrum in which a number of peaks observed in a diffraction angle 2θ range of 38° to 44° is 1.

2. The noble metal alloy powder according to claim 1, wherein a coefficient of variation CV of content measured by energy dispersive X-ray spectroscopy is 0.2 or less for each of the noble metal elements.

3. The noble metal alloy powder according to claim 1 or 2, wherein the average particle diameter is 10 μm or less.

4. The noble metal alloy powder according to claim 1 or 2, wherein the average particle diameter is more than 10 μm and not more than 100 μm.

5. A noble metal alloy paste comprising: the noble metal alloy powder according to any one of claims 1 to 4; a resin; and a solvent.

6. A noble metal alloy film obtained through application and firing of the noble metal alloy paste according to claim 5.

7. A method of producing a noble metal alloy powder formed of an alloy of 5 or more noble metal elements, comprising:

a raw material preparation step of preparing the 5 or more noble metal elements separately to one another as raw materials with each in a form of a metal powder or a metal oxide powder;
a slurry production step of mixing the raw material powders, calcium carbonate, and water to obtain a slurry and setting a pH of the slurry as 8.0 or higher;
a mixing step of mixing the slurry;
a first firing step of firing the slurry in a non-oxidizing atmosphere to obtain an alloy powder;
a first acetic acid treatment step of treating the alloy powder with acetic acid; and
a first washing step of water washing and drying the alloy powder after the first acetic acid treatment step.

8. The method of producing a noble metal alloy powder according to claim 7, further comprising a second firing step of firing the alloy powder after the first washing step in a non-oxidizing atmosphere.

9. The method of producing a noble metal alloy powder according to claim 8, further comprising:

a third firing step of firing the alloy powder after the second firing step in a mixed state with calcium carbonate in a non-oxidizing atmosphere;
a second acetic acid treatment step of treating the alloy powder after the third firing step with acetic acid; and
a second washing step of water washing and drying the alloy powder after the second acetic acid treatment step.

10. A method of producing the noble metal alloy powder according to claim 3 or 4, further comprising a particle size adjustment step of adjusting particle size of the alloy powder after the first washing step, prior to the second firing step.

11. A method of producing a noble metal alloy paste comprising mixing the noble metal alloy powder according to any one of claims 1 to 4, a resin, and a solvent to obtain a paste.

12. A method of producing a noble metal alloy film comprising:

applying the noble metal alloy paste according to claim 5 onto a substrate; and
firing the noble metal alloy paste that has been applied to obtain a noble metal alloy film.

# *FIG. 1*

```
┌─────────────────────────┐
│      Raw material        │
│    preparation step      │
└─────────────────────────┘
             │
             ▼
┌─────────────────────────┐
│  Slurry production step  │
└─────────────────────────┘
             │
             ▼
┌─────────────────────────┐
│      Mixing step         │
└─────────────────────────┘
             │
             ▼
┌─────────────────────────┐
│    First firing step     │
└─────────────────────────┘
             │
             ▼
┌─────────────────────────┐
│    First acetic acid     │
│     treatment step       │
└─────────────────────────┘
             │
             ▼
┌─────────────────────────┐
│   First washing step     │
└─────────────────────────┘
```

# FIG. 2

```
┌─────────────────────────────────────────────┐
│  ┌─────────────────────────────┐             │
│  │        Raw material         │             │
│  │      preparation step       │             │
│  └─────────────────────────────┘             │
│                 │                            │
│                 ▼                            │
│  ┌─────────────────────────────┐             │
│  │    Slurry production step    │             │
│  └─────────────────────────────┘             │
│                 │                            │
│                 ▼                            │
│  ┌─────────────────────────────┐             │   Front-end steps
│  │         Mixing step          │             │
│  └─────────────────────────────┘             │
│                 │                            │
│                 ▼                            │
│  ┌─────────────────────────────┐             │
│  │      First firing step       │             │
│  └─────────────────────────────┘             │
│                 │                            │
│                 ▼                            │
│  ┌─────────────────────────────┐             │
│  │       First acetic acid      │             │
│  │       treatment step         │             │
│  └─────────────────────────────┘             │
│                 │                            │
│                 ▼                            │
│  ┌─────────────────────────────┐             │
│  │      First washing step      │             │
│  └─────────────────────────────┘             │
└─────────────────────────────────────────────┘
                  │
                  ▼
┌─────────────────────────────────────────────┐
│  ┌ ─ ─ ─ ─ ─ ─ ─ ─ ─ ─ ─ ─ ─ ─┐             │
│  │        Particle size         │             │
│  │      adjustment step         │             │
│  └ ─ ─ ─ ─ ─ ─ ─ ─ ─ ─ ─ ─ ─ ─┘             │   Back-end steps
│                 │                            │
│                 ▼                            │
│  ┌─────────────────────────────┐             │
│  │      Second firing step      │             │
│  └─────────────────────────────┘             │
└─────────────────────────────────────────────┘
```

FIG. 3

Front-end steps

```
┌─────────────────────┐
│   Raw material      │
│  preparation step   │
└─────────────────────┘
          ↓
┌─────────────────────┐
│ Slurry production   │
│       step          │
└─────────────────────┘
          ↓
┌─────────────────────┐
│    Mixing step      │
└─────────────────────┘
          ↓
┌─────────────────────┐
│  First firing step  │
└─────────────────────┘
          ↓
┌─────────────────────┐
│  First acetic acid  │
│   treatment step    │
└─────────────────────┘
          ↓
┌─────────────────────┐
│  First washing step │
└─────────────────────┘
```

Back-end steps

```
┌─────────────────────┐
│   Particle size     │
│  adjustment step    │
└─────────────────────┘
          ↓
┌─────────────────────┐
│ Second firing step  │
└─────────────────────┘
          ↓
┌─────────────────────┐
│  Third firing step  │
└─────────────────────┘
          ↓
┌─────────────────────┐
│ Second acetic acid  │
│   treatment step    │
└─────────────────────┘
          ↓
┌─────────────────────┐
│ Second washing step │
└─────────────────────┘
```

FIG. 4

## INTERNATIONAL SEARCH REPORT

| International application No. |
| --- |
| **PCT/JP2024/006396** |

| A. | CLASSIFICATION OF SUBJECT MATTER |
| --- | --- |

*B22F 1/00*(2022.01)i; *B22F 1/05*(2022.01)i; *B22F 1/07*(2022.01)i; *B22F 1/14*(2022.01)i; *B22F 9/20*(2006.01)i;
*B82Y 30/00*(2011.01)i; *C22C 5/00*(2006.01)i; *C22C 30/00*(2006.01)i
FI:  B22F1/00 K; C22C5/00; B22F1/05; B22F1/07; B82Y30/00; B22F9/20 Z; C22C30/00; B22F1/14 400

According to International Patent Classification (IPC) or to both national classification and IPC

| B. | FIELDS SEARCHED |
| --- | --- |

Minimum documentation searched (classification system followed by classification symbols)

B22F1/00; B22F1/05; B22F1/07; B22F1/14; B22F9/20; B82Y30/00; C22C5/00; C22C30/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/020377 A1 (KYOTO UNIVERSITY) 04 February 2021 (2021-02-04)<br>entire text, all drawings | 1-12 |
| A | WO 2018/154292 A1 (SWANSEA UNIVERSITY) 30 August 2018 (2018-08-30)<br>entire text, all drawings | 1-12 |
| A | WO 2022/132883 A1 (UNIVERSITY OF MARYLAND, COLLEGE PARK) 23 June 2022 (2022-06-23)<br>entire text, all drawings | 1-12 |
| A | JP 8-325602 A (TANAKA KIKINZOKU INTERNATL KK) 10 December 1996 (1996-12-10)<br>entire text, all drawings | 1-12 |
| A | JP 10-102106 A (TANAKA KIKINZOKU KOGYO KK) 21 April 1998 (1998-04-21)<br>entire text, all drawings | 1-12 |

☐ Further documents are listed in the continuation of Box C.  ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **24 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/006396**

| Patent document cited in search report | | | Publication date (day/month/year) | Patent family member(s) | | | Publication date (day/month/year) |
|---|---|---|---|---|---|---|---|
| WO | 2021/020377 | A1 | 04 February 2021 | US | 2022/0258231 | A1 | |
| | | | | EP | 4005701 | A1 | |
| | | | | TW | 202108240 | A | |
| WO | 2018/154292 | A1 | 30 August 2018 | (Family: none) | | | |
| WO | 2022/132883 | A1 | 23 June 2022 | EP | 4263090 | A1 | |
| | | | | KR | 10-2023-0118986 | A | |
| JP | 8-325602 | A | 10 December 1996 | (Family: none) | | | |
| JP | 10-102106 | A | 21 April 1998 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10102107 A
- JP 2011162868 A
- JP 2022150862 A
- JP 2022139228 A

**Non-patent literature cited in the description**

- *Journal of the American Chemical Society*, February 2022, vol. 144 (8), 3365-3369